# EUROPEAN PATENT APPLICATION

(11) **EP 4 365 135 A1**
(43) Date of publication of application: **08.05.2024**
(21) Application number: 22851011.1
(22) Date of filing: 12.04.2022
(51) Int. Cl.: C01B 32/50, B01J 38/12

(54) **TOTAL RECOVERY PROCESS FOR CARBON DIOXIDE DISCHARGED BY CATALYTIC CRACKING REGENERATION APPARATUS**

(30) Priority: 03.08.2021 CN 202110884249
(71) Applicant: Shanghai Yuanhan Energy & Chemical Technology Co., Ltd., Shanghai 200135 (CN)
(72) Inventor: ZHANG, Yunfeng, Shanghai 200135 (CN); LIU, Qing, Shanghai 200135 (CN); ZHANG, Xiangquan, Shanghai 200135 (CN); WU, Wenjun, Shanghai 200135 (CN)
(74) Representative: Dai, Simin
(86) International application number: PCT/CN2022/086411
(87) International publication number: WO 2023/010883

(57) **Abstract**

The present disclosure discloses a full recovery process for carbon dioxide discharged from a catalytic cracking regeneration device. A system required by the process includes a catalytic cracking regeneration device, a flue gas recovery device, a high-temperature flue gas fan, an oxygen production device, and a carbon-based gas mixer. According to the present disclosure, flue gas of the catalytic cracking regeneration device is circulated and a concentration of the carbon dioxide is increased, making the carbon dioxide to be easier to capture, creating favorable conditions for low-cost carbon capture, utilization, and storage (CCUS), reducing carbon dioxide emissions, and reducing the greenhouse effect. In addition, carbon-based gas is prepared by mixing circulated flue gas and oxygen and used as combustion assisting gas for the catalytic cracking regeneration device, and nitrogen is replaced with the carbon dioxide, avoiding the formation of nitrogen oxides during the combustion process, reducing environmental pollution, and greatly reducing denitrification cost. After the nitrogen is replaced with the carbon dioxide, the radiation intensity in the catalytic cracking regeneration device is greatly increased, promoting the reaction of C+CO₂→CO, greatly enhancing the combustion effect, making the reaction more complete, and achieving significant effects of energy conservation and consumption reduction.

## Description

### TECHNICAL FIELD

The present disclosure relates to the technical field of catalytic cracking regeneration, and in particular to a full recovery process for carbon dioxide discharged from a catalytic cracking regeneration device.

### BACKGROUND

As influencing all aspects of ecological security, water resource security, and food security, global warming exacerbates the risk of extreme climatic disasters and poses a serious threat to the living environment of human beings. The emission of greenhouse gases is the most important factor causing global warming, among which the greenhouse effect produced by carbon dioxide accounts for more than 70% of all greenhouse gases. Accordingly, the emission reduction of carbon dioxide is an urgent problem to be solved, which is crucial for controlling the greenhouse effect and slowing down global warming. The application of the present disclosure can realize the capture of carbon dioxide and create favorable conditions for low-cost carbon capture, utilization, and storage (CCUS).

At present, the catalytic cracking regeneration device mostly adopts air assisted combustion, in which only 21% of oxygen in the air is involved in the combustion, and 78% of nitrogen is not involved in the combustion, but a large amount of nitrogen is unnecessarily heated and discharged into the atmosphere at a high temperature, resulting in a large amount of heat loss and a high consumption of fuel. In addition, nitrogen also reacts with oxygen at a high temperature to generate NOₓ, and the NOₓ gas discharged into the atmosphere is liable to form acid rain and cause environmental pollution. The application of the present disclosure can improve the combustion efficiency, reduce NOₓ emission, and achieve the effect of energy conservation and emission reduction of the catalytic cracking regeneration device.

### SUMMARY

The purpose of the present disclosure is to provide a full recovery process for carbon dioxide discharged from a catalytic cracking regeneration device to solve the disadvantages in the prior art.

The present disclosure adopts the following technical solution.

The present disclosure provides a full recovery process for carbon dioxide discharged from a catalytic cracking regeneration device. A system required for the process includes a catalytic cracking regeneration device, a flue gas recovery device, a high-temperature flue gas fan, an oxygen production device, and a carbon-based gas mixer.

The carbon-based gas mixer includes an oxygen channel, an oxygen channel regulating valve, a flue gas circulation channel, an oxygen distributor, a mixer, a carbon-based gas channel, and an oxygen concentration analyzer. The oxygen distributor is a hollow cylinder. A plurality of small holes are evenly provided on a peripheral wall of the hollow cylinder. The mixer is a hollow cylinder. The oxygen channel regulating valve is located on the oxygen channel. An outlet of the oxygen channel is connected with an end of the oxygen distributor. The oxygen distributor and part of the oxygen channel are inserted into the mixer through a side wall of the mixer. An outlet of the flue gas circulation channel is connected with one end of the mixer. An inlet of the carbon-based gas channel is connected with another end of the mixer. The oxygen concentration analyzer is provided on the carbon-based gas channel.

A flue gas outlet of the catalytic cracking regeneration device is connected with the flue gas recovery device. The flue gas recovery device is connected with the high-temperature flue gas fan. A venting pipe is provided on a connection pipe between the flue gas recovery device and the high-temperature flue gas fan. The high-temperature flue gas fan is connected with the carbon-based gas mixer and a downstream carbon dioxide enrichment utilization device, respectively. A flow rate regulating valve is provided on a connection pipe between the high-temperature flue gas fan and the carbon-based gas mixer.

An oxygen outlet of the oxygen production device is connected with the carbon-based gas mixer. A flow rate regulating valve is provided on a connection pipe between the oxygen outlet of the oxygen production device and the carbon-based gas mixer.

The carbon-based gas mixer is connected with a bottom portion and an upper portion of the catalytic cracking regeneration device, respectively. A main pipe of a connection pipe of the carbon-based gas mixer and the bottom portion and the upper portion of the catalytic cracking regeneration device is provided with a flow meter, a temperature sensor, and a pressure sensor. A branch pipe of the connection pipe of the carbon-based gas mixer and the bottom portion and the upper portion of the catalytic cracking regeneration device is provided with a flow rate regulating valve.

A nitrogen outlet of the oxygen production device is connected to the main pipe of the connection pipe of the carbon-based gas mixer and the bottom portion and the upper portion of the catalytic cracking regeneration device. An air combustion fan is connected to the main pipe of the connection pipe of the carbon-based gas mixer and the bottom portion and the upper portion of the catalytic cracking regeneration device.

The full recovery process includes the following operations:
1) utilizing air for combustion at an initial stage, in response to generating a flue gas, utilizing a carbon-based gas made by mixing a circulated flue gas and oxygen as a combustion agent to gradually replace the air for combustion, and after a period of circulation, completely replacing the air with the carbon-based gas for combustion, the carbon-based gas for combustion being in a normal operation;
2) the circulated flue gas entering the flue gas recovery device from the catalytic cracking regeneration device to perform heat recovery, dedusting, and desulfurization, controlling the high-temperature flue gas fan to pressurize the circulated flue gas, introducing part of a pressurized circulated flue gas into the carbon-based gas mixer, introducing rest of the pressurized circulated flue gas into the downstream carbon dioxide enrichment utilization device, controlling the oxygen production device to introduce the produced oxygen into the carbon-based gas mixer, and mixing the oxygen and the circulated flue gas in the carbon-based gas mixer to produce the carbon-based gas;
3) introducing the carbon-based gas into the bottom portion and the upper portion of the catalytic cracking regeneration device in two ways as the combustion agent, wherein the carbon-based gas entering into the bottom portion of the catalytic cracking regeneration device is a main combustion agent providing a majority of a combustion gas for combustion of a catalyst carbon deposit in the catalytic cracking regeneration device, and the carbon-based gas entering into the upper portion of the catalytic cracking regeneration device is an auxiliary combustion agent providing the combustion gas for a small count of carbon monoxide that is not burned up in the catalytic cracking regeneration device; and
4) performing the operation 2) and the operation 3) on the circulated flue gas produced by the catalytic cracking regeneration device, and repeating the above operations.

In some embodiments, three adjacent small holes on the oxygen distributor in the carbon-based gas mixer may be arranged in a same equilateral triangular shape; and the oxygen distributor may be located on a side of the mixer close to the flue gas circulation channel.

In some embodiments, the carbon-based gas mixer may be connected with the upper portion of the catalytic cracking regeneration device. The upper portion of the catalytic cracking regeneration device may be located at a position with a distance from the top portion of the catalytic cracking regeneration device being 1/5-2/5 of a distance from the bottom portion of the catalytic cracking regeneration device to the top portion of the catalytic cracking regeneration device.

In some embodiments, a concentration of carbon dioxide of the circulated flue gas produced by the catalytic cracking regeneration device in the operation 2) may be at least 95%.

In some embodiments, the circulated flue gas in the operation 2) may be partially introduced into the carbon-based gas mixer after being pressurized to a range of 0.05-0.2 MPa by the high-temperature flue gas fan.

In some embodiments, a purity of the oxygen produced by the oxygen production device in the operation 2) may be equal to or greater than 90%, and a pressure of the oxygen produced by the oxygen production device in the operation 2) may be within a range of 0.05-0.2 MPa.

In some embodiments, an oxygen content of the carbon-based gas in the operation 2) may be within a range of 15%-30%.

In some embodiments, 98%-99% of the carbon-based gas in the operation 2) may enter the bottom portion of the catalytic cracking regeneration device and 1%-2% of the carbon-based gas may enter the upper portion of the catalytic cracking regeneration device.

In some embodiments, a regeneration temperature in the catalytic cracking regeneration device in the operation 2) may be controlled to be within a range of 650°C-700°C.

The present disclosure has the following beneficial effects.
1. According to the present disclosure, the flue gas of the catalytic cracking regeneration device is circulated, and the carbon dioxide is enriched to a concentration of more than 95%. The concentration of the carbon dioxide is increased, thereby making the capture of the carbon dioxide easier, creating favorable conditions for low-cost CCUS, reducing carbon dioxide emissions, and reducing the greenhouse effect.
2. According to the present disclosure, the carbon-based gas with a concentration suitable for the catalytic cracking regeneration device is prepared by mixing the circulated flue gas and the oxygen and used as the combustion assisting gas for the catalytic cracking regeneration device, and nitrogen is replaced with the carbon dioxide, thereby eliminating conditions for generating NOₓ, avoiding the generation of NOₓ during the combustion process, reducing environmental pollution, and greatly reduce denitrification cost.
   The combustion mechanism of conventional air-assisted combustion may be represented by: CₘHₙ + O₂ + N₂ → CO₂ + H₂O + NOₓ. The combustion mechanism of the carbon-based gas (CO₂ + O₂) for assisting combustion in the present disclosure may be represented by CₘHₙ + O₂ + CO₂ → CO₂ + H₂O.
3. According to the characteristics of gas convection and radiation, only triatomic and polyatomic gases have radiation capacity, while diatomic gases have almost no radiation capacity. After the nitrogen in the combustion assisting air is replaced with the carbon dioxide in the circulated flue gas, the radiation intensity in the catalytic cracking regeneration device is greatly improved; in addition, in the atmosphere of carbon dioxide, the reaction of C + CO₂ → CO can be promoted , and CO is more likely to be burned completely than the residual carbon adsorbed in the catalyst, thereby greatly enhancing the combustion effect, making the reaction more complete, and achieving significant effects of energy conservation and consumption reduction.
4. According to the present disclosure, the carbon-based gas is used as a combustion agent for the combustion of catalyst carbon deposit in the catalytic cracking regeneration device. The carbon-based gas is fed into the bottom portion and the upper portion of the catalytic cracking regeneration device in two ways based on the technology of staged oxygen supply combustion. 98-99% of the carbon-based gas entering into the bottom portion of the catalytic cracking regeneration device is the main combustion agent providing the majority of the combustion gas for combustion of the catalyst carbon deposit in the catalytic cracking regeneration device, and 1-2% of the carbon-based gas entering into the upper portion of the catalytic cracking regeneration device is the auxiliary combustion agent providing the combustion gas for the small count of carbon monoxide that is not burned up in the catalytic cracking regeneration device. In this way, the combustion in the catalytic cracking regeneration device can be more complete, thereby effectively solving the problem of tail combustion, ensuring the safety of the equipment, and greatly reducing safety risks.
5. The optimization of the combustion environment makes the temperature distribution in the catalytic cracking regeneration device more reasonable, effectively extending the service life of the catalytic cracking regeneration device. The improvement of the combustion conditions can make the catalyst regeneration more complete, extending the service life of the catalyst, reducing catalyst consumption, and improving product quality.
6. The present disclosure adopts flue gas circulation, which increases the water vapor content of the flue gas, thereby recovering more heat and power generation.
7. The present disclosure uses the by-product nitrogen produced by the oxygen production device as protective gas, which is used for shutdown replacement, purging, cooling, and catalyst protection of the catalytic cracking regeneration device, thereby making the device safer and more reliable.
8. The embodiments of the present disclosure do not require modification of the main structure of the catalytic cracking regeneration device, and only require partial optimization and transformation of the combustion assisting system and the flue gas circulation system. Meanwhile, the original air combustion fan is retained to replenish the gas amount when the flue gas amount is insufficient, or when an abnormality occurs in the carbon-based gas combustion, air combustion can be switched on without disturbance, thereby ensuring normal oxygen supply and combustion of the catalytic cracking regeneration device.

### BRIEF DESCRIPTION OF THE DRAWINGS

FIG. 1 is a schematic structural diagram illustrating a system required for a full recovery process of the present disclosure;
FIG. 2 is a schematic structural diagram illustrating a carbon-based gas mixer;
FIG. 3 is a schematic diagram illustrating arrangements of small holes on an oxygen distributor in a carbon-based gas mixer; and
FIG. 4 is a schematic diagram illustrating a workflow of a carbon-based gas mixer.

### DETAILED DESCRIPTION

The present disclosure will be further illustrated by way of exemplary embodiments, which will be described in detail by means of the accompanying drawings. The following embodiments are only used to illustrate the present disclosure, and not intended to limit the scope of the present disclosure.

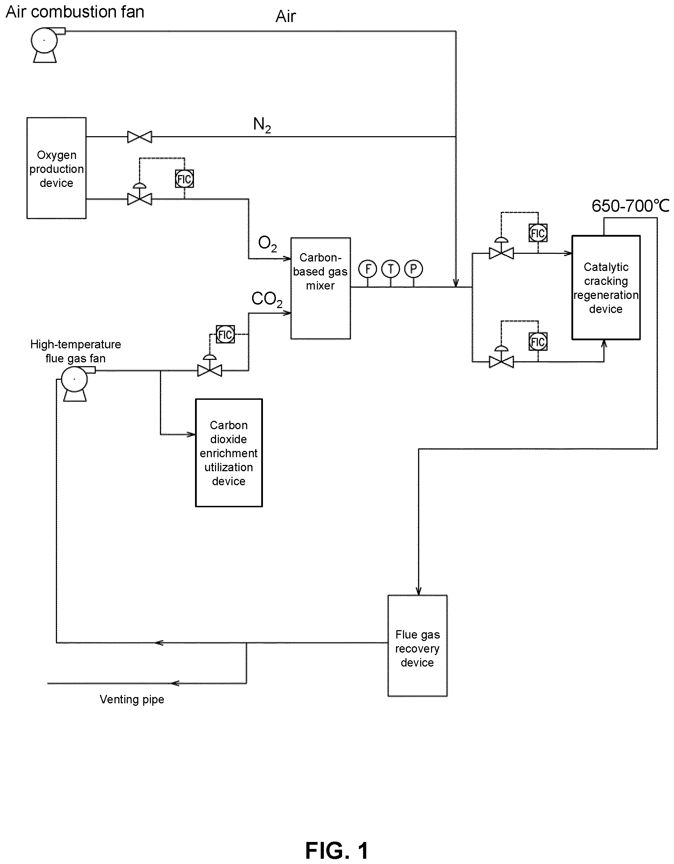

The present disclosure provides a full recovery process for carbon dioxide discharged from a catalytic cracking regeneration device. As illustrated in FIG. 1, a system required for the process may include a catalytic cracking regeneration device, a flue gas recovery device, a high-temperature flue gas fan, an oxygen production device, and a carbon-based gas mixer.

The oxygen production device may adopt methods of producing oxygen based on different scales of catalytic cracking regeneration devices, such as a cryogenic method, a pressure swing adsorption method, etc. A purity of oxygen may be equal to or greater than 90% and a pressure of the oxygen may be within a range of 0.05-0.2MPa. For large catalytic cracking regeneration devices, the oxygen may be produced using the cryogenic method. Firstly, air may be compressed and cooled, and the air may be liquefied. Gas and liquid may contact on a distillation tray to perform mass and heat exchange based on differences in boiling points of oxygen and nitrogen components. The high-boiling-point oxygen component may continue to condense from steam into liquid, and the low-boiling-point nitrogen component may continue to transfer into the steam, so that the nitrogen content in the rising steam may continue to increase, while the oxygen content in the downstream liquid may be higher, thus separating the oxygen and the nitrogen to obtain the oxygen with a purity of more than 99.6%, and obtain high-purity nitrogen as a by-product. For small and medium-sized catalytic cracking regeneration devices, the oxygen may be produced using the pressure swing adsorption method. When the air is pressurized and passes through an adsorption layer of a molecular sieve adsorption tower, nitrogen molecules may be adsorbed preferentially, oxygen molecules may remain in a gas phase and become finished oxygen. When the adsorption of the nitrogen component in an adsorbent reaches saturation, the nitrogen molecules adsorbed on a surface of the adsorbent may desorbed by decompression or vacuuming and sent out a boundary region to restore an adsorption capacity of the adsorbent, thereby separating the oxygen and the nitrogen to obtain the oxygen with a purity of 90-95% and the high-purity nitrogen as a by-product.

An outlet of the high-temperature flue gas fan may be provided with a safety valve and a back pressure valve. When an outlet pressure is too high, the circulated flue gas may return to an inlet of the high-temperature flue gas fan in time to prevent the excessively high outlet pressure of the high-temperature flue gas fan from causing adverse influence to the high-temperature flue gas fan.

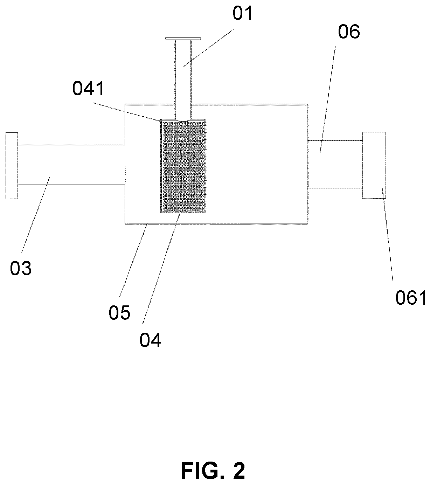

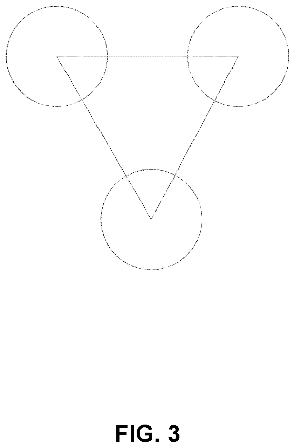

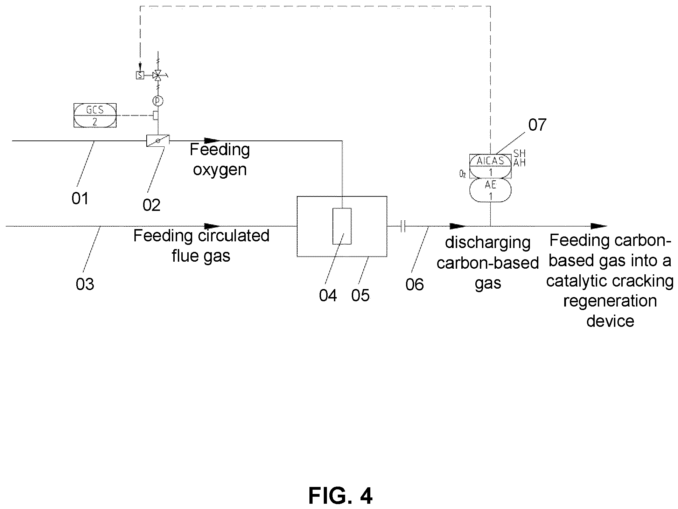

As illustrated in FIGs. 2-4, the carbon-based gas mixer may include an oxygen channel 01, an oxygen channel regulating valve 02, a flue gas circulation channel 03, an oxygen distributor 04, a mixer 05, a carbon-based gas channel 06, and an oxygen concentration analyzer 07. The oxygen distributor 04 may be a hollow cylinder. A plurality of small holes 041 may be evenly provided on a peripheral wall of the hollow cylinder. Preferably, three adjacent small holes 041 on the oxygen distributor 04 may be arranged in a same equilateral triangular shape, thereby further facilitating rapid and even mixing of the oxygen with the circulated flue gas after the oxygen passes through the small holes 041. A diameter of each of the plurality of small hole 041 may be within a range of 5-10 mm. A distance between the adjacent small holes 041 may be within, but is not limited to, a range of 5-10 mm. The mixer 05 may be a hollow cylinder. The oxygen channel regulating valve 02 may be located on the oxygen channel 01. An outlet of the oxygen channel 01 may be connected with an end of the oxygen distributor 04. The oxygen distributor 04 and part of the oxygen channel 01 may be inserted into the mixer 05 through a side wall of the mixer 05. Preferably, the oxygen distributor 04 may be located on a side of the mixer 05 close to the flue gas circulation channel 03, which further facilitating rapid and even mixing of the oxygen with the circulated flue gas. An outlet of the flue gas circulation channel 03 may be connected with an end of the mixer 05. An inlet of the carbon-based gas channel 06 may be connected with another end of the mixer 05. An outlet of the carbon-based gas channel 06 may be fixedly connected by setting a flange 061. The oxygen concentration analyzer may be located on the carbon-based gas channel. The oxygen concentration analyzer 07 may be connected with the oxygen channel regulating valve 02 through a control system, thereby regulating a valve opening of the oxygen channel regulating valve 02 based on data of the oxygen concentration analyzer 07. The oxygen channel 01 and the oxygen distributor 04 may be made of stainless steel. The flue gas circulation channel 03, the mixer 05, and the carbon-based gas channel 06 may be made of stainless steel or carbon steel.

A mixing and transportation process of the carbon-based gas may include the following operations. The circulated flue gas may enter the mixer 05 from the circulating flue gas channel 03. The oxygen may enter the oxygen distributor 04 from the oxygen channel 01 and may be evenly distributed in the mixer 05 to be rapidly and evenly mixed with the circulated flue gas through the oxygen distributor 04 and then sent to the catalytic cracking regeneration device from the carbon-based gas channel 06. The carbon-based gas channel 06 may be provided with the oxygen concentration analyzer 07. The valve opening of the oxygen channel regulating valve 02 may be controlled based on the data of the oxygen concentration analyzer 07, thereby further regulating the oxygen content entering the mixer 05. When the oxygen content satisfies the requirements, the mixing reaches a balance. When the oxygen is regulated, the valve opening of the oxygen channel regulating valve 02 may be regulated in an ascending manner. When the oxygen concentration satisfies the requirements, the valve opening of the oxygen channel regulating valve 02 may be fixed.

A flue gas outlet of the catalytic cracking regeneration device may be connected with the flue gas recovery device. The flue gas recovery device may be connected with the high-temperature flue gas fan. A venting pipe may be provided on a connection pipe between the flue gas recovery device and the high-temperature flue gas fan. When an amount of flue gas is too large, excess flue gas may be discharged. The high-temperature flue gas fan may be connected with the carbon-based gas mixer and the downstream carbon dioxide enrichment utilization device, respectively. A flow regulating valve may be provided on a connection pipe between the high-temperature flue gas fan and the carbon-based gas mixer. The downstream carbon dioxide enrichment utilization device may be applied to the fields such as oil and gas extraction, chemical applications, food storage and preservation, etc.

An oxygen outlet of the oxygen production device may be connected with the carbon-based gas mixer. A flow regulating valve may be provided on a connection pipe between oxygen outlet of the oxygen production device and the carbon-based gas mixer.

The carbon-based gas mixer may be connected with a bottom portion and an upper portion of the catalytic cracking regeneration device, respectively. A main pipe of a connection pipe of the carbon-based gas mixer and the bottom portion and the upper portion of the catalytic cracking regeneration device may be provided with a flow meter, a temperature sensor, and a pressure sensor. A branch pipe of the connection pipe of the carbon-based gas mixer and the bottom portion and the upper portion of the catalytic cracking regeneration device may be provided with a flow rate regulating valve. The upper portion of the catalytic cracking regeneration device may be located at a position with a distance from a top portion of the catalytic cracking regeneration device being 1/5-2/5 of a distance from the bottom portion of the catalytic cracking regeneration device to the top portion of the catalytic cracking regeneration device.

A nitrogen outlet of the oxygen production device may be connected to the main pipe of the connection pipe of the carbon-based gas mixer and the bottom portion and the upper portion of the catalytic cracking regeneration device, so that a by-product nitrogen may be used as protective gas for device shutdown replacement, purging, cooling and catalyst protection, which makes the device safer and more reliable. An original air combustion fan is connected to the main pipe of the connection pipe of the carbon-based gas mixer and the bottom portion and the upper portion of the catalytic cracking regeneration device, so that the gas amount may be replenished when the flue gas amount is insufficient, or when an abnormality occurs in the carbon-based gas combustion, air combustion may be switched on without disturbance, thereby ensuring normal oxygen supply and combustion of the catalytic cracking regeneration device.

The full recovery process may include the following operations:
1) utilizing air for combustion at an initial stage, in response to generating the flue gas, utilizing the carbon-based gas made by mixing the circulated flue gas and the oxygen as a combustion agent to gradually replace the air for combustion, and after a period of circulation, completely replacing the air with the carbon-based gas for combustion, the carbon-based gas for combustion being in a normal operation; wherein in a process of gradual replacement, the concentration of the carbon dioxide becomes higher, reaching more than 95% (excluding water vapor);
2) the circulated flue gas entering the flue gas recovery device from the catalytic cracking regeneration device to perform heat recovery, dedusting, and desulfurization, controlling the high-temperature flue gas fan to pressurize the circulated flue gas to a range of 0.05-0.2 MPa, introducing part of a pressurized circulated flue gas into the carbon-based gas mixer, introducing rest of the pressurized circulated flue gas into the downstream carbon dioxide enrichment utilization device, controlling the oxygen production device to introduce the produced oxygen into the carbon-based gas mixer, and mixing the oxygen and the circulated flue gas in the carbon-based gas mixer to produce the carbon-based gas; wherein the oxygen content of carbon-based gas is within a range of 15-30%;
3) introducing the carbon-based gas into the bottom portion and the upper portion of the catalytic cracking regeneration device in two ways as the combustion agent based on the technology of staged oxygen supply combustion, wherein 98-99% of the carbon-based gas entering into the bottom portion of the catalytic cracking regeneration device is a main combustion agent providing a majority of a combustion gas for combustion of a catalyst carbon deposit in the catalytic cracking regeneration device, and 1-2% of the carbon-based gas entering into the upper portion of the catalytic cracking regeneration device is an auxiliary combustion agent providing the combustion gas for a small count of carbon monoxide that is not burned up in the catalytic cracking regeneration device; wherein a regeneration temperature in the catalytic cracking regeneration device is controlled to be within a range of 650-700 °C; and
4) performing operation 2) and operation 3) on the circulated flue gas produced by the catalytic cracking regeneration device, and repeating the above operations.

## Claims

1. A full recovery process for carbon dioxide discharged from a catalytic cracking regeneration device, wherein a system required for the process includes a catalytic cracking regeneration device, a flue gas recovery device, a high-temperature flue gas fan, an oxygen production device, and a carbon-based gas mixer; wherein
the carbon-based gas mixer includes an oxygen channel, an oxygen channel regulating valve, a flue gas circulation channel, an oxygen distributor, a mixer, a carbon-based gas channel, and an oxygen concentration analyzer; the oxygen distributor is a hollow cylinder, a plurality of small holes are evenly provided on a peripheral wall of the hollow cylinder, and the mixer is a hollow cylinder; the oxygen channel regulating valve is located on the oxygen channel, an outlet of the oxygen channel is connected with an end of the oxygen distributor, and the oxygen distributor and part of the oxygen channel are inserted into the mixer through a side wall of the mixer; an outlet of the flue gas circulation channel is connected with one end of the mixer, and an inlet of the carbon-based gas channel is connected with another end of the mixer, and the oxygen concentration analyzer is provided on the carbon-based gas channel;
a flue gas outlet of the catalytic cracking regeneration device is connected with the flue gas recovery device, the flue gas recovery device is connected with the high-temperature flue gas fan, and a venting pipe is provided on a connection pipe between the flue gas recovery device and the high-temperature flue gas fan; the high-temperature flue gas fan is connected with the carbon-based gas mixer and a downstream carbon dioxide enrichment utilization device, respectively, and a flow rate regulating valve is provided on a connection pipe between the high-temperature flue gas fan and the carbon-based gas mixer;
an oxygen outlet of the oxygen production device is connected with the carbon-based gas mixer, and a flow rate regulating valve is provided on a connection pipe between the oxygen outlet of the oxygen production device and the carbon-based gas mixer;
the carbon-based gas mixer is connected with a bottom portion and an upper portion of the catalytic cracking regeneration device, respectively, a main pipe of a connection pipe of the carbon-based gas mixer and the bottom portion and the upper portion of the catalytic cracking regeneration device is provided with a flow meter, a temperature sensor, and a pressure sensor, and a branch pipe of the connection pipe of the carbon-based gas mixer and the bottom portion and the upper portion of the catalytic cracking regeneration device is provided with a flow rate regulating valve; and
a nitrogen outlet of the oxygen production device is connected to the main pipe of the connection pipe of the carbon-based gas mixer and the bottom portion and the upper portion of the catalytic cracking regeneration device, and an air combustion fan is connected to the main pipe of the connection pipe of the carbon-based gas mixer and the bottom portion and the upper portion of the catalytic cracking regeneration device; and
the full recovery process includes:
1) utilizing air for combustion at an initial stage, in response to generating a flue gas, utilizing a carbon-based gas made by mixing a circulated flue gas and oxygen as a combustion agent to gradually replace the air for combustion, and after a period of circulation, completely replacing the air with the carbon-based gas for combustion, the carbon-based gas for combustion being in a normal operation;
2) the circulated flue gas entering the flue gas recovery device from the catalytic cracking regeneration device to perform heat recovery, dedusting, and desulfurization, controlling the high-temperature flue gas fan to pressurize the circulated flue gas, introducing part of a pressurized circulated flue gas into the carbon-based gas mixer, introducing rest of the pressurized circulated flue gas into the downstream carbon dioxide enrichment utilization device, controlling the oxygen production device to introduce the produced oxygen into the carbon-based gas mixer, and mixing the oxygen and the circulated flue gas in the carbon-based gas mixer to produce the carbon-based gas;
3) introducing the carbon-based gas into the bottom portion and the upper portion of the catalytic cracking regeneration device in two ways as the combustion agent, wherein the carbon-based gas entering into the bottom portion of the catalytic cracking regeneration device is a main combustion agent providing a majority of a combustion gas for combustion of a catalyst carbon deposit in the catalytic cracking regeneration device, and the carbon-based gas entering into the upper portion of the catalytic cracking regeneration device is an auxiliary combustion agent providing the combustion gas for a small count of carbon monoxide that is not burned up in the catalytic cracking regeneration device; and
4) performing the operation 2) and the operation 3) on the circulated flue gas produced by the catalytic cracking regeneration device, repeating the above operations.

2. The full recovery process of claim 1, three adjacent small holes on the oxygen distributor in the carbon-based gas mixer are arranged in a same equilateral triangular shape; and the oxygen distributor is located on a side of the mixer close to the flue gas circulation channel.

3. The full recovery process of claim 1, wherein the carbon-based gas mixer is connected with the upper portion of the catalytic cracking regeneration device, and the upper portion of the catalytic cracking regeneration device is located at a position with a distance from the top portion of the catalytic cracking regeneration device being 1/5-2/5 of a distance from the bottom portion of the catalytic cracking regeneration device to the top portion of the catalytic cracking regeneration device.

4. The full recovery process of claim 1, wherein a concentration of carbon dioxide of the circulated flue gas produced by the catalytic cracking regeneration device in the operation 2) is at least 95%.

5. The full recovery process of claim 1, wherein the circulated flue gas in the operation 2) is partially introduced into the carbon-based gas mixer after being pressurized to a range of 0.05-0.2 MPa by the high-temperature flue gas fan.

6. The full recovery process of claim 1, wherein a purity of the oxygen produced by the oxygen production device in the operation 2) is equal to or greater than 90%, and a pressure of the oxygen produced by the oxygen production device in the operation 2) is within a range of 0.05-0.2 MPa.

7. The full recovery process of claim 1, wherein an oxygen content of the carbon-based gas in the operation 2) is within a range of 15%-30%.

8. The full recovery process of claim 1, wherein 98%-99% of the carbon-based gas in the operation 2) enters the bottom portion of the catalytic cracking regeneration device and 1%-2% of the carbon-based gas enters the upper portion of the catalytic cracking regeneration device.

9. The full recovery process of claim 1, wherein a regeneration temperature in the catalytic cracking regeneration device in the operation 2) is controlled to be within a range of 650°C-700°C.
